# EUROPEAN PATENT SPECIFICATION

(11) **EP 0 512 287 B1**
(45) Date of publication and mention of the grant of the patent: **04.10.1995**
(21) Application number: 92106459.8
(22) Date of filing: 14.04.1992
(51) Int. Cl.: B01D 61/56, C02F 11/12, B01D 35/06

(54) **Electro-endosmosis type dehydrator**
Vorrichtung zur Entwässerung durch Elektroendosmose
Appareil de déshydratation par électro-endosmose

(30) Priority: 09.05.1991 JP 102892/91
(43) Date of publication of application: 11.11.1992
(73) Proprietor: FUJI ELECTRIC CO., LTD., Kawasaki-shi Kanagawa 210 (JP)
(72) Inventor: Yamaguchi, Mikimasa, c/o Fuji Electric Co., Ltd., Kawasaki-shi, Kanagawa (JP); Imanishi, Hiroshi, c/o Fuji Electric Co., Ltd., Kawasaki-shi, Kanagawa (JP); Matsushita, Hiroshi, c/o Fuji Electric Co., Ltd., Kawasaki-shi, Kanagawa (JP)
(74) Representative: Grünecker, Kinkeldey, Stockmair & Schwanhäusser Anwaltssozietät

(56) References cited:
- PATENT ABSTRACTS OF JAPAN, vol. 9, no. 200 (C-298)(1923), 16 August 1985
- PATENT ABSTRACTS OF JAPAN, vol. 14, no. 330 (C-741), 16 July 1990
- PATENT ABSTRACTS OF JAPAN, vol. 11, no. 132 (C-417)(2579), 24 April 1987
- PATENT ABSTRACTS OF JAPAN, vol. 9, no. 138 (C-286)(1861), 13 June 1985

## Description

### BACKGROUND OF THE INVENTION

This invention relates to an electro-endosmosis type dehydrator for dehydrating the sludge formed, for instance, in a sewage-treatment plant, and more particularly to the structure of electrodes provided for a rotary drum in an electro-endosmosis type dehydrator in which the rotary drum is combined with a press belt.

An electro-endosmosis type dehydrator of this type has been disclosed, for instance, by Japanese Patent Unexamined Publication No. Sho. 60-25597. In the conventional dehydrator, voltage is applied across a rotary drum having electrodes on the cylindrical wall thereof and a press belt confronted through a sludge passageway with the cylindrical wall of the rotary drum, and the water contained in the sludge supplied to the sludge passageway is collected on the side of the press belt and discharged therefrom.

When the sludge is dehydrated with the electro-endosmosis type dehydrator, the sludge produces gas in the dehydrator by electrolysis. The gas thus produced is electrically non-conductive. If the gas is held detained between the sludge and the electrode surface during dehydration, it will obstruct the application of voltage to the sludge, thus lowering the sludge dehydrating performance on electrolysis. In this case, the gas produced on the side of the press belt (where water is collected) is discharged out of the system together with the water filtered; whereas, the gas produced on the side of the rotary drum (where no water is collected) is enclosed between the sludge and the electrode surface. Hence, it is essential to quickly remove the gas from the rotary drum side; more specifically, the gas produced between the sludge and the electrode surface must be quickly discharged out of the system to prevent the lowering of the performance of electro-endosmosis dehydration. For this purpose, the present applicant has proposed an electro-endosmosis type dehydrator proposed under Japanese Patent Unexamined Publication No. Hei. 2-119906 according to the precharacterizing part of claim 1 in which a plurality of degasifying strings are laid over the cylindrical wall of the rotary drum.

The electro-endosmosis type dehydrator with the degasifying strings is disadvantageous in the following points: The strings are belts which are laid over the electrode surface of the rotary drum and a pulley. Therefore, the strings are driven in such a manner as to cut into the sludge. Hence, when the sludge is conveyed along the sludge passageway while being compressed, the degasifying passageways formed by the strings may not work being clogged up with sludge, or the sludge often shifts the strings from their predetermined positions to the right or left. The strings are made of insulating material. Therefore, if the number of strings is increased to improve the degasifying performance, then the effective area of the electrodes which are brought into contact with the sludge is decreased as much; that is, the electro-endosmosis is lowered as much.

### SUMMARY OF THE INVENTION

In view of the foregoing, an object of this invention is to provide an electro-endosmosis type dehydrator in which the above-described difficulties accompanying a conventional electro-endosmosis type dehydrator have been eliminated, and the gas produced on the side of the rotary drum where no water is collected is quickly discharged out of the system, and more particularly, to improve the structure of the electrodes of the rotary drum.

In order to achieve the foregoing object of the invention in an electro-endosmosis type dehydrator of the invention, the rotary drum includes spacers arranged on the cylindrical wall as cross ties and a wire electrode or a plurality of wire electrodes is arranged around the cylindrical wall over said spacers to form degasifying slits between parallel wire sections and is fixed to said spacer at the intersections to be positioned slightly apart from the cylindrical wall. Gas generated from said sludge by electrolysis is discharged from said degasifying slits and spaced betwen said cylindrical wall and said wire electrode.

In the dehydrator, in order to prevent the degasifying slits from being clogged up, the wire electrodes are trapezoidal in section, and are arranged on the cylindrical wall of the rotary drum with the shorter of the two parallel bases of the trapezoid set closer to the central axis of the rotary drum. Furthermore, in order that the electrodes are installed on the rotary drum or replaced with ease, the electrode assembly is divided into a plurality of arcuate blocks; that is, those arcuate blocks are installed on the cylindrical wall of the rotary drum to form the electrode assembly.

In order to remove the sludge which, passing through the degasifying slits, has deposited in the space under the electrode assembly arranged on the cylindrical wall of the rotary drum, the electro-endosmosis type dehydrator of the invention has a washing means for jetting water into the space under the electrode assembly.

In the dehydrator thus designed, the gas produced between the sludge and the electrode surface of the rotary drum by electrolysis during dehydration is allowed to flow through the degasifying slits (for instance about 5 µm) between the wire electrodes forming the electrode assembly into the space under the electrodes and then discharged out of the system. The wire electrodes are trapezoidal in section, and are arranged on the cylindrical wall of the rotary drum with the shorter of the two parallel sides of the trapezoid set closer to the central axis of the rotary drum. Hence, each of the degasifying slits formed between the wire electrodes is larger in width towards the central axis of the rotary drum. Therefore, even if the sludge particles go in the degasifying slits, they can go through the latter with ease, so that the slits will never be clogged up with the sludge. As the dehydration advances, the sludge may be deposited in the degasifying slits. In this case, the washing means is operated to jet water into the space under the electrodes to remove the sludge from the degasifying slits. On the other hand, the electrode assembly is divided into a plurality of arcuate blocks. Hence, the electrode assembly can be readily installed on the rotary drum, and it can be replaced with ease.

### BRIEF DESCRIPTION OF THE DRAWINGS

In the accompanying drawings:
Fig. 1 is a sectional view showing the arrangement of an example of an electro-endosmosis type dehydrator which constitutes one embodiment of this invention;
Fig. 2 is a side view of a rotary drum in the dehydrator shown in Fig. 1;
Fig. 3 is a side view showing one of the arcuate blocks into which an electrode assembly has been divided;
Fig. 4 is an enlarged diagram showing the arrangement of wire electrodes included in the dehydrator shown in Fig. 1; and
Fig. 5 is a perspective view for a description of a method of forming the electrode assembly.

### DETAILED DESCRIPTION OF THE PREFERRED EMBODIMENTS

One preferred embodiment of this invention will be described with reference to the accompanying drawings.

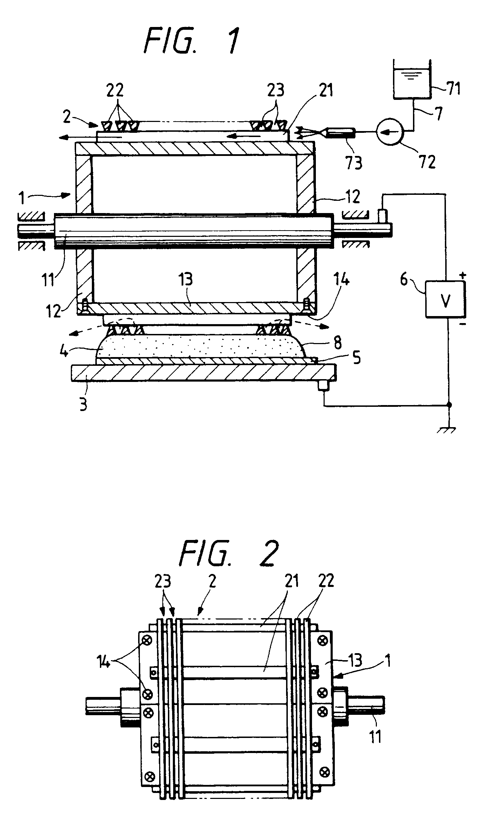

In Figs. 1 through 4, reference numeral 1 designates a rotary drum; 2, an electrode assembly mounted on the cylindrical wall of the rotary drum; 3, a press belt in the form of a caterpillar which is confronted through a sludge passageway 4 with the electrode assembly on the rotary drum 1; 5, a filtering cloth belt laid over the press belt 3; 6, a DC source for applying voltage between the rotary drum 1 and the press belt 3; 7, washing means for washing the electrode assembly 2; and 8, sludge supplied to the sludge passageway. The arrangement and the sludge dehydrating operation of the electro-endosmosis type dehydrator are disclosed, for instance, by Japanese Patent Unexamined Publication No. Sho. 60-25597 in more detail.

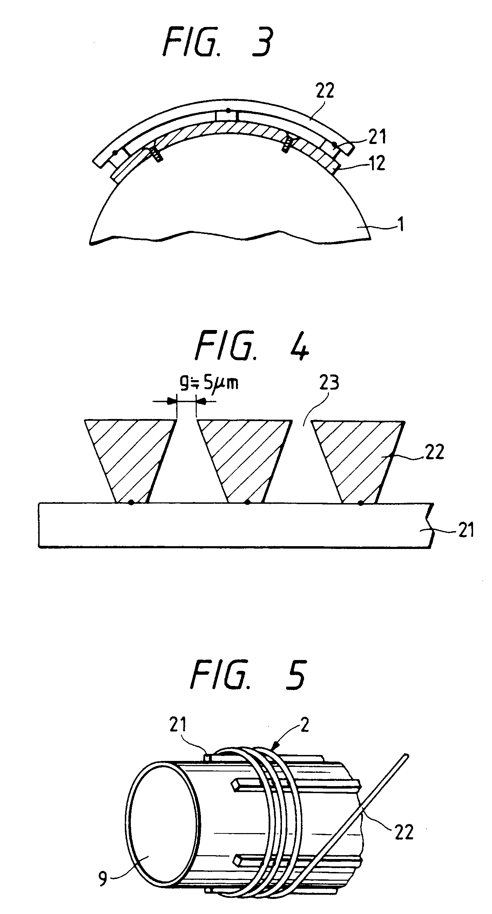

The rotary drum 1 comprises: a rotary shaft 11; two disk-shaped brackets 12 mounted on the right and left end portion of the rotary shaft 11; and an electrode mounting board 13 laid over the two brackets 12. The electrode assembly 2 comprises: spacers 21 arranged on the cylindrical wall of the drum as cross ties; and a number of wire electrodes 22 laid over the spacers in such a manner that they are in parallel with one another and form small gaps about 5 µm in width, namely, degasifying slits 23 therebetween. The wire electrodes 22 are for instance titanium wires which are trapezoidal in section as shown in Fig. 4. With the shorter of the two parallel bases of the trapezoid on the spacer 21, each wire electrode 22 is spot-welded to the latter 21.

The above-described electrode assembly 2 is formed for instance as follows: As shown in Fig. 5, a bobbin 9 is prepared which is equal in outside diameter to the rotary drum, and the spacers like cross ties are arranged on the bobbin 9 at predetermined intervals, and temporarily secured to it. A wire electrode 22 is wound over the spacers 21, and spot-welded to the latter 21 at the intersections. Thereafter, the electrode assembly 2 is removed from the bobbin 9. Under this condition, the electrode assembly 2 is divided into a plurality of arcuate blocks by cutting the wire electrodes 22 at equal angular intervals. On the other hand, the electrode mounting board of the rotary drum 1 is divided into a plurality of arcuate segments in compliance with the electrode assembly arcuate blocks. The electrode assembly arcuate blocks are fixedly mounted on the electrode mounting board arcuate segments, and then the latter are arranged on the cylindrical wall of the rotary drum 1, and secured to the brackets 12 with bolts 14. The electrode assembly 2 thus secured is coated with platinum or iridium oxide so as to be insoluble.

The aforementioned washing means 7 comprises: a washing water tank 71; a pump 72 connected to a pipe line extended from the water tank 71; and a nozzle 73 for jetting washing water. The nozzle 73 is so positioned as to jet washing water towards the electrode assembly 2; more specifically, the nozzle jets water into the space under the wire electrodes 22; that is, the gap between the electrode mounting board 13 and the wire electrodes 22 which are spaced from each other by the spacers 21.

The operation of the dehydrator thus constructed will be described. First, voltage is applied across the rotary drum 1 and the press belt 3, and the press belt 3 is driven. Under this condition, sludge 8 is supplied to the sludge passageway 4. In this case, the electrodes on the rotary drum and the press belt form an electric field between them, as a result of which electro-endosmosis acts on the sludge 8, so that the charged sludge containing water is moved towards the press belt 3, and the liquid passed through the filtrating cloth belt 5 is discharged out of the system through draining holes formed in the press belt 3. On the other hand, during the electro-endosmosis dehydration, the sludge produces gas electrolytically. A part of the gas thus produced, which is on the side of the electrode surface of the rotary drum 1, will not cover the surfaces of the electrodes, being enclosed between the electrode surface of the rotary drum 1 and the sludge 8; that is, it flows quickly into the space under the electrode assembly 2 through the degasifying slits 23 formed between the wire electrodes 22, thus being discharged into the air around the dehydrator.

Each of the degasifying slits 23 is small in width, about 5 µm, and each of the wire electrodes 22 is trapezoidal in section as shown in FIG 4. That is, the degasifying slits are larger in width towards the space under the electrodes. On the other hand, the sludge 8 moving along the sludge passageway is generally more than 10 µm in particle size. Hence, it is substantially impossible for the sludge 8 to pass through the degasifying slits 23 into the rotary drum during dehydration. Even if sludge particles smaller than 5 µm in particle size go in the degasifying slits 23, they will flow into the space under the electrodes together with the discharge gas without clogging the degasifying slits 23, because the slits are larger in width towards the space under the electrodes as was described above. When the dehydration is carried out repeatedly, sludge particles may go into the degasifying slits and deposit in the space under the electrode assembly 2. The sludge particles thus deposited can be washed away by operating the washing means 7; that is, they may be removed from the space under the electrodes and from the degasifying slits 23 by jetting water with the nozzle 73 of the washing means 7. On the other hand, when the dehydrator is used repeatedly or run for a long time, the wire electrodes 22 of the rotary drum 1 may be worn out or broken. In this case, the wire electrodes can be replaced with new ones readily and quickly, because the electrode assembly 2 is made up of the arcuate blocks which can be removed from the rotary drum.

As was described above, the gas generated during electro-endosmosis dehydration is quickly discharged out of the system through the degasifying slits of the electrode assembly. Hence, the electro-endosmosis type dehydrator is free from the difficulty that the gas is detained in the dehydrator, thus obstructing the application of voltage to the sludge; that is, the dehydrator operates with high efficiency. The present inventors have performed tests for evaluation, and found the following facts: With the conventional electro-endosmosis type dehydrator, in order to dehydrate the sludge as required, it is necessary to apply 110 volts; whereas, with the electro-endosmosis type dehydrator of the invention in which the electrode assembly is designed as described above, the same effect can be obtained with 80 volts. In the case where the width of the degasifying slits are set to 5 µm, the quantity of sludge passing through the electrode assembly is considerably small; more specifically, even when the electro-endosmosis type dehydrator is operated fully for twenty-four hours, the degasifying function is maintained satisfactory by cleaning the dehydrator only once a day.

As was described above, in the electro-endosmosis type dehydrator of the invention, the electrode assembly on the rotary drum is made up of a number of wire electrodes which are arranged on the cylindrical wall of the rotary drum in such a manner that they are in parallel with one another with the degasifying slits therebetween. Hence, the gas generated during electro-endosmosis dehydration is quickly discharge out of the system through the degasifying slits formed between the wire electrodes, with the result that the difficulty is eliminated that the gas is detained in the dehydrator to obstruct the application of voltage to the sludge. That is, the electro-endosmosis type dehydrator of the invention operates with high efficiency. Furthermore, in the dehydrator of the invention, the slits functioning as degasifying passageways are formed in the electrode assembly. This solves the problem accompanying the conventional electro-endosmosis type dehydrator in which the degasifying strings are provided on the cylindrical wall of the rotary drum, thus ensuring high reliability in the operation.

## Claims

1. An electro-endosmosis type dehydrator in which sludge (8) is conveyed along a sludge passageway (4) while being dehydrated; said dehydrator comprising:
a rotary drum (1) including a cylindrical wall;
a press belt (3) confronted with said rotary drum (1) for defining said sludge passageway (4) therebetween, at least one of said rotary drum (1) and said press belt (3) being driven to convey said sludge (8) along said sludge passageway; and
means (6) for applying voltage to the rotary drum (1) and said press belt (3) so that water contained in said sludge (8) supplied to said sludge passageway (4) is collected on a side of said press belt (3)
**characterized in that**
said rotary drum (1) includes spacers (21) arranged on the cylindrical wall as cross ties, and a wire electrode or a plurality of wire electrodes (22) arranged around said cylindrical wall over said spacers (21) to form degasifying slits (23) between parallel wire sections and fixed to said spacers (21) at the intersections to be positioned slightly apart from said cylindrical wall;
wherein gas generated from said sludge (8) by electrolysis is discharged from said degasifying slits (23) and a space between said cylindrical wall and said wire electrode (22).

2. The dehydrator according to claim 1, wherein said wire electrode (22) is trapezoidal in section, and is fixed to said spacers (21) with the shorter of the two parallel bases of the trapezoid set closer to the center of said rotary drum (1).

3. The dehydrator according to claim 1 or 2 wherein said cylindrical wall is divided into a plurality of arcuate electrode mounting boards.

4. The dehydrator according to one of claims 1 to 3, further comprising:
washing means (71) for jetting washing water to the space between said cylindrical wall and said wire electrode (22) to remove sludge therefrom.

5. The dehydrator according to one of claims 1 to 4 having a plurality of arcuate wire electrodes (22) arranged in uniform intervals.

6. The dehydrator according to one of claims 1 to 4, wherein said wire electrode (22) being spirally wound around said cylindrical wall.

## Patentansprüche

1. Elektroendosmose-Entwässerungsgerät, bei dem Schlamm (8) entlang eines Schlammdurchganges (4) gefördert wird, währenddessen er entwässert wird; wobei das Entwässerungsgerät umfaßt:
eine Rotationstrommel (1), die eine zylindrische Wand einschließt;
einen Preßriemen (3), der der Rotationstrommel (1) gegenübersteht zum Begrenzen des Schlammdurchganges (4) dazwischen, wobei zumindest eines von den Teilen Rotationstrommel (1) und Preßriemen (3) angetrieben wird, um den Schlamm (8) entlang des Schlammdurchganges zu fördern; und
eine Einrichtung (6) zum Anlegen einer Spannung an die Rotationstrommel (1) und den Preßriemen (3), so daß Wasser, das in dem Schlamm (8) beinhaltet ist, der dem Schlammdurchgang (4) zugeführt wird, auf einer Seite des Preßriemens (3) gesammelt wird,
**dadurch gekennzeichnet**, daß
die Rotationstrommel (1) Abstandsstücke (21) einschließt, die auf der zylindrischen Wand als Querstreben angeordnet sind, und eine Drahtelektrode oder eine Mehrzahl von Drahtelektroden (22) einschließt, die um die zylindrische Wand über die Abstandsstücke (21) angeordnet ist (sind), um Entgasungsschlitze (23) zwischen parallelen Drahtabschnitten zu bilden und die mit den Abstandsstücken (21) an Kreuzungspunkten befestigt ist (sind), um mit geringem Abstand von der zylindrischen Wand positioniert zu sein;
wobei ein Gas, das von dem Schlamm (8) durch die Elektrolyse erzeugt wird, von den Entgasungsschlitzen (23) und einem Raum zwischen der zylindrischen Wand und der Drahtelektrode (22) ausgetragen wird.

2. Entwässerungsgerät nach Anspruch 1, wobei die Drahtelektrode (22) im Querschnitt trapezförmig ist und mit den Abstandsstücken (21) so befestigt ist, daß die kürzere der zwei parallelen Grundlinien des Trapezes der Drahtelektrode (22) näher zur Mitte der Rotationstrommel (1) gesetzt ist.

3. Entwässerungsgerät nach Anspruch 1 oder 2, wobei die zylindrische Wand in eine Mehrzahl bogenförmiger Elektrodenaufnahmen unterteilt ist.

4. Entwässerungsgerät nach einem der Ansprüche 1 bis 3, das ferner umfaßt:
eine Wascheinrichtung (170) zum Einspritzen von Waschwasser in den Raum zwischen die zylindrische Wand und die Drahtelektrode (22), um davon Schlamm zu entfernen.

5. Entwässerungsgerät nach einem der Ansprüche 1 bis 4, das eine Mehrzahl von bogenförmigen Drahtelektroden (22) aufweist, die in gleichförmigen Abständen angeordnet sind.

6. Entwässerungsgerät nach einem der Ansprüche 1 bis 4, wobei die Drahtelektrode (22) spiralförmig um die zylindrische Wand gewunden ist.

## Revendications

1. Appareil de déshydratation du type à endosmose électrique, dans lequel des boues (8) sont transportées le long d'un passage de boues (4) tout en étant déshydratées ; ledit appareil de déshydratation comprenant :
- un tambour rotatif (1) qui comprend une paroi cylindrique ;
- une courroie de presse (3) en face dudit tambour rotatif (1) pour définir entre eux ledit passage de boues (4), l'un au moins dudit tambour rotatif (1) et de ladite courroie de presse (3) étant entraîné pour transporter lesdites boues (8) le long dudit passage de boues ; et
- des moyens fixes pour appliquer un voltage au tambour rotatif (1) et à ladite courroie de presse (3), de sorte que l'eau contenue dans lesdites boues (8) fournies audit passage de boues (4) est recueillie sur un côté de ladite courroie de presse (3) ;
caractérisé en ce que ledit tambour rotatif (1) comprend des éléments d'espacement (21) agencés sous la forme de traverses sur la paroi cylindrique, et une électrode en fil ou une pluralité d'électrodes en fil (22) agencées autour de ladite paroi cylindrique par dessus lesdits éléments d'espacement (21) pour former des fentes de dégazage (23) entre des sections de fil parallèles, et ladite électrode en fil étant fixée auxdits éléments d'espacement (21) au niveau des intersections de manière à être positionnée légèrement en éloignement de ladite paroi cylindrique ;
grâce à quoi les gaz produits depuis lesdites boues (8) par électrolyse sont déchargés depuis lesdites fentes de dégazage (23) et un espace entre ladite paroi cylindrique et ladite électrode en fil (22).

2. Appareil de déshydratation selon la revendication 1, dans lequel ladite électrode en fil (21) a une section trapézoïdale, et elle est fixée auxdits éléments d'espacement (21) de telle sorte que la plus courte des deux bases parallèles du trapèze est placée plus proche du centre dudit tambour rotatif (1).

3. Appareil de déshydratation selon l'une ou l'autre des revendications 1 et 2, dans lequel ladite paroi cylindrique est divisée en une pluralité de plaques de montage d'électrodes cintrées.

4. Appareil de déshydratation selon l'une quelconque des revendications 1 à 3, comprenant en outre des organes de lavage (71) pour projeter de l'eau de lavage vers l'espace entre ladite paroi cylindrique et ladite électrode en fil (22) pour enlever les boues hors de cet espace.

5. Appareil de déshydratation selon l'une quelconque des revendications 1 à 4, comportant une pluralité d'électrodes en fil cintrées (22) agencées à des intervalles uniformes.

6. Appareil de déshydratation selon l'une quelconque des revendications 1 à 4, dans lequel ladite électrode en fil (22) est enroulée en spirale autour de ladite paroi cylindrique.
